(19) **Europäisches Patentamt / European Patent Office / Office européen des brevets**

(11) **EP 1 544 580 B1**

(12) **EUROPEAN PATENT SPECIFICATION**

(45) Date of publication and mention
of the grant of the patent:
**19.10.2011 Bulletin 2011/42**

(51) Int Cl.:
*G01D 5/14* *(2006.01)* *G01D 18/00* *(2006.01)*
*G01D 5/245* *(2006.01)* *G01D 5/244* *(2006.01)*
*G01D 3/02* *(2006.01)* *G01B 7/30* *(2006.01)*

(21) Application number: **04029483.7**

(22) Date of filing: **13.12.2004**

(54) **Angle detecting sensor**

Winkelgeber

Capteur d'angles

(84) Designated Contracting States:
**DE FR GB**

(30) Priority: **16.12.2003 JP 2003417747**

(43) Date of publication of application:
**22.06.2005 Bulletin 2005/25**

(73) Proprietor: **ALPS ELECTRIC CO., LTD.**
**Tokyo 145-8501 (JP)**

(72) Inventors:
• **Hasegawa, Kazuo**
**Tokyo 145-8501 (JP)**

• **Tokunaga, Ichiro**
**Tokyo 145-8501 (JP)**
• **Sudo, Toshihiro**
**Tokyo 145-8501 (JP)**

(74) Representative: **Klunker . Schmitt-Nilson . Hirsch**
**Patentanwälte**
**Destouchesstrasse 68**
**80796 München (DE)**

(56) References cited:
**WO-A-02/16879 DE-A1- 19 818 799**
**FR-A- 2 776 064**

**Description**

The present invention relates to an angle detecting sensor using a magnetoresistive element such as a GMR element, and more particularly, an angle detecting sensor having a waveform-distortion compensating function capable of improving a detection accuracy of a detected rotation angle even in a case where waveform distortion occurs in a signal output from a magnetoresistive element.

2. Description of the Related Art

A rotation angle of a steering wheel of a vehicle is detected by using an angle detecting sensor having a wheel which rotates in synchronization with a rotating member (a measured object) such as a steering shaft. A sensing unit of the angle detecting sensor employs magnetoresistive elements which detect a magnetic field to generate an output signal. The angle detecting sensors using the magnetoresistive elements are disclosed to precedent technical documents such as the following Patent Documents 1, 2, 3, and 4.

The magnetoresistive element basically has a laminated structure of four layers: an anti-ferromagnetic layer; a fixed magnetic layer (a pinned magnetic layer); a non-magnetic layer; and a free magnetic layer. A magnetization direction of the fixed magnetic layer is fixed to a specific direction by an exchange bias field generated between the anti-ferromagnetic layer and the fixed magnetic layer. On the other hand, the magnetization of the free magnetic layer is varied by an external magnetic field.

The angle detecting sensor includes two bridge circuits, each of which is constructed with connecting in parallel two serially-connected circuits of two magnetoresistive elements. Magnets of the wheel are disposed over the two bridge circuits or on the outer circumference thereof.

When an input angle (rotation angle) $\theta$ is varied by rotation of the wheel, the magnetization direction of the free magnetic layer in each of magnetoresistive elements is varied in accordance with the external magnetic field generated by the magnet. A resistance value of the magnetoresistive element is varied corresponding to an angle between the magnetization direction of the free magnetic layer and the magnetization direction of the fixed magnetic layer. Therefore, two signals of +sin and -sin signals are output from one bridge circuit; and two signals of +cos and -cos signals having a phase difference of 90° from the $\pm$ sin signals are output from the other bridge circuit.

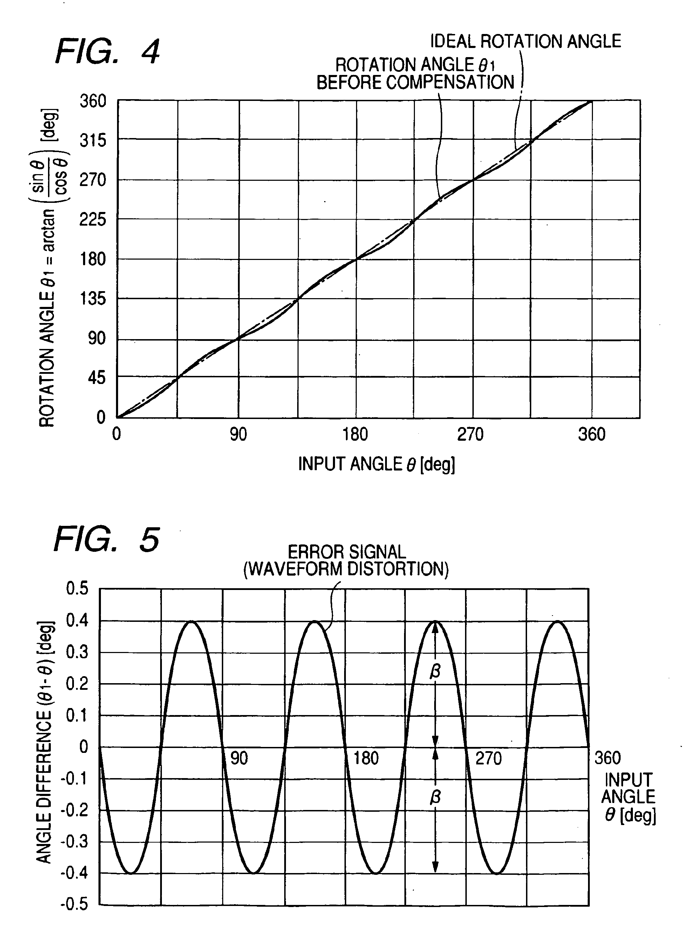

In the angle detecting sensor, the +sin and -sin signals are differentially amplified to generate a SIN signal (a sine wave signal); and similarly, the +cos and -cos signals are differentially amplified to generate a COS signal (a cosine wave signal). Next, a tangent value is calculated by dividing the SIN signal with the COS signal (tan = SIN signal/COS signal), and the inverse tangent value (arctan) is calculated from the tangent value to obtain the rotation angle $\theta_1$ of the rotating member. In addition, in the angle detecting sensor, a relation between the input angle $\theta$ and the rotation angle $\theta_1$ is represented by a graph of Fig. 4.

[Patent Document 1] Japanese Unexamined Patent Application Publication No. 2002-303536
[Patent Document 2] Japanese Unexamined Patent Application Publication No. 2000-35470
[Patent Document 3] Japanese Unexamined Patent Application Publication No. 2003-106866
[Patent Document 4] Japanese Unexamined Patent Application Publication No. 2003-66127

In the angle detecting sensor, although a theoretical rotation angle $\theta_1$ output from the angle detecting sensor is linearly proportional to the input angle $\theta$, an actual rotation angle $\theta_1$ where a sine wave signal is superposed on a linear function is not linearly proportional to the input angle 9 (see Fig. 4).

According to an analysis, it is determined that waveform distortion occurs in the four signals (+sin, - sin, +cos, and -cos signals) output from the two bridge circuits, so that the waveform distortion is one of factors of the non-linear proportionality.

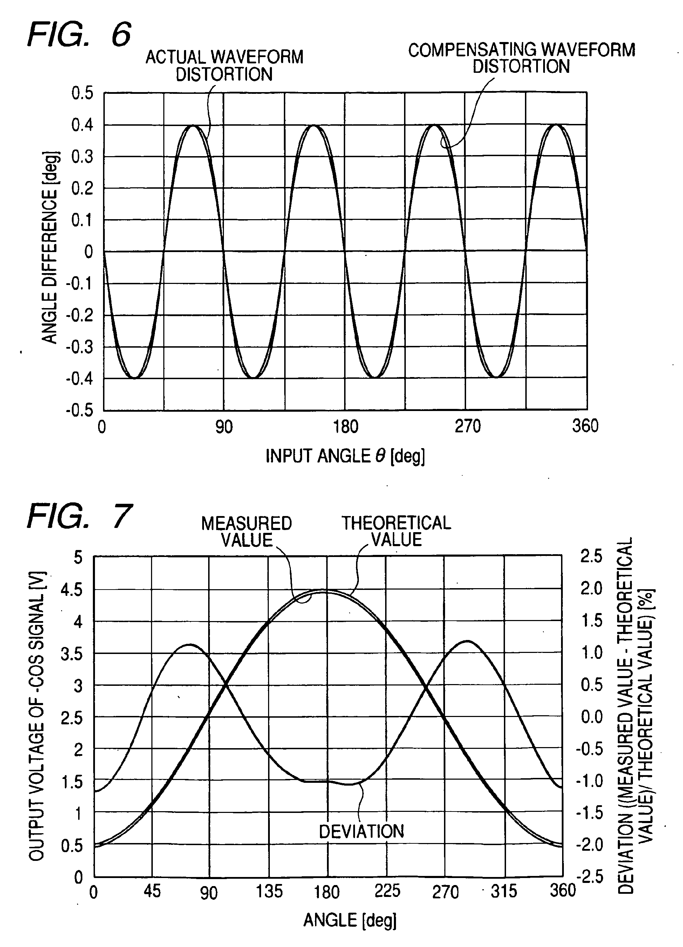

Fig. 7 shows a theoretical value and a measured value of an output voltage of a -cos signal and a deviation between the theoretical value and the measured value ((theoretical value) - (measured value))/(theoretical value) [%], where the -cos signal is one of four signals output from the two bridge circuits when the wheel having magnets disposed over the magnetoresistive elements or on the outer circumference thereof rotates by one turn (360°). In addition, the +sin, -sin, and +cos signals are similar to the -cos signal.

As shown in Fig. 7, it can be understood that the waveform (the measured value) of the actually measured output voltage includes an error (waveform distortion) deviated from the waveform of the theoretical output voltage.

In addition, it can be seen that the deviation is roughly varied in a form of a cosine wave with respect to the input angle $\theta$. However, since a power voltage applied to the bridge circuits is a constant voltage, the deviation means that the resistance value (actual resistance value) of the magnetoresistive element is deviated from the theoretical resistance value thereof.

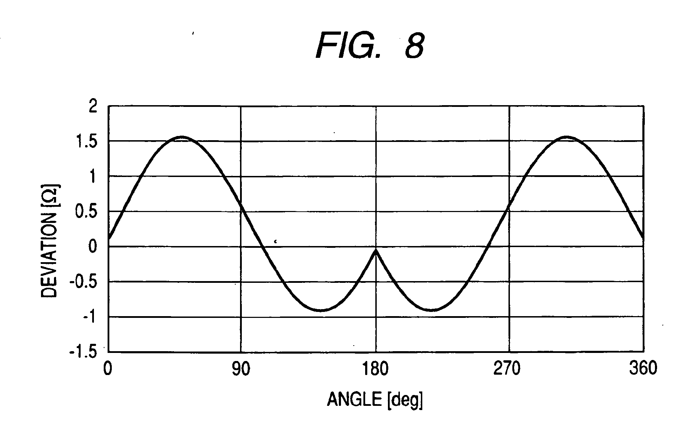

Fig. 8 is a graph showing the deviation ((theoretical resistance value) - (actual resistance value))/(actual resistance value) [Ω] of change of the resistance value of the magnetoresistive element with respect to rotation of the magnetic field.

Theoretically, the deviation of change of the resistance value of the magnetoresistive element with respect to rotation of the magnetic field is always 0 [Ω]. However, it can be understood that the actual magnetoresistive element has resistance distortion due to its structural characteristics as shown in Fig. 8.

The angle detecting sensor has two bridge circuits, each of which is constructed with four magnetoresistive elements having the aforementioned feature. Since the resistance distortion of the magnetoresistive elements affects the four signals (+sin, -sin, +cos, and -cos signals) output from the two bridge circuits, it is considered that the waveform distortion as an error signal occurs in each of the four signals, as shown in Fig. 7.

Since the waveform distortion occurs in the four signal waveforms due to the resistance distortion, waveform distortion also occurs in the SIN and COS signals. In addition, since the waveform distortion affects the calculation of the tangent value (tan) and the inverse tangent value (arctan), there is a problem in that it is impossible to improve accuracy of the angle output detected from the angle detecting sensor.

From DE 198 18 799 A1 a rotation angle measuring device for rotary shaft, e.g. steering shaft of an automobile is known. The device has a magnetic measuring rod and a sensor device. The measuring rod has at least two coaxial magnetically coded rings, each with a number of magnetic poles detected by corresponding magnetoresistive sensor elements of the sensor device, to provide magnetic field signals which are correlated, together with signals from a third Hall element sensor for the magnetic poles around the other half of one of the rings.

The FR 2 776 064 discloses a device for measuring an angular position using a magnetic sensor, useful for determining an angular position and the speed of shafts on rotating machinery. Four pairs of magnetoresistances are located on the top surface of an integrated circuit which has a ring magnet on its lower surface producing a polarizing field. A bar magnet is attached to the measured object and produces a second field which modifies the effect on the magnetoresistances which are connected as two Wheatstone bridges to produce the sine and cosine of the measured angle.

From the WO 02/16879 A1 a method for phase angle correction during scanning of a code crack by means of sensor elements is known. These sensor elements provide a sinusoidal and a cosinusoidal signal, and the phase difference between the two signals is corrected according to the formula:

$$\varphi = 1/n \cdot \arctan((U_1 - \sin y \cdot U_2) / (U_2 \cdot \cos y))$$

wherein y is the phase error, $U_1$ and $U_2$ are the sinusoidal and cosinusoidal voltages of the sensor elements and n is the number of periods.

In order to solve the problems in the prior art, an object of the present invention is to provide an angle detecting sensor having a waveform-distortion compensating function capable of improving a detection accuracy of a detected rotation angle by removing affect of the waveform distortion even in a case where waveform distortion occurs in a signal output from a magnetoresistive element.

SUMMARY OF THE INVENTION

The present invention provides an angle detecting sensor having a sensing unit for generating a rotational magnetic field corresponding to rotation of a measured object, sensing the rotational magnetic field, and outputting an output signal corresponding to an input angle of rotation, and a signal processing unit for calculating an rotation angle of the measured object from the output signal, wherein the signal processing unit comprises: at least signal converting means for generating SIN and COS signals from the output signal; first function calculating means for calculating a non-compensated rotation angle of the measured object from the SIN and COS signals; and compensating means for detecting an error signal between the non-compensated rotation angle and the input angle and calculating a compensated value approximate to the error signal, and calculating the rotation angle of the measured object by removing the compensated value from the non-compensated rotation angle.

In the present invention, in consideration that the waveform distortion, that is an error signal, included in the output signal of the sensing unit is a periodic function which can be artificially simulated using an approximate trigonometric function, the accuracy of the detected rotation angle can be improved by subtracting an compensated value artificially simulated using the approximate trigonometric function from an non-compensated rotation angle with predetermined calculation.

For example, the compensating means may comprise: at least second function calculating means for generating a compensated value by approximating the non-compensated error signal with a trigonometric function; and subtracting means for subtracting the compensated value from the non-compensated rotation angle.

In addition, the first function calculating means may comprise: a TAN process for calculating a tangent value from the SIN and COS signals; and an ATAN process for calculating an inverse tangent value from the tangent value to calculate the non-compensated rotation angle.

For example, the error signal may be waveform distortion generated due to a signal output from the sensing unit having resistance distortion.

The error signal (waveform distortion) includes any periodic function which can be approximate to a trigonometric function, and it may be, for example, a phase difference between signals output from the sensing unit or noise generated due to structural characteristics of the sensing unit.

For example, if the input angle input as the rotation angle of the measured object and the non-compensated rotation angle are represented by $\theta$ and $\theta_1$, respectively, and if a compensation coefficient defined as a peak value of an angle difference ($\theta_1-\theta$) between the non-compensated rotation angle $\theta_1$ and the input angle $\theta$ and a waveform-distortion compensated value are represented by $\beta$ and $\delta s$, respectively, the waveform-distortion compensated value $\delta s$ may be approximated by the following Equation 1:

$$[\text{Equation 1}]$$

$$\delta s = -\beta \cdot \sin 4\theta_1$$

where, $\theta_1$ = arctan(sin$\theta$/con$\theta$).

In addition, a plurality of magnetoresistive elements may be disposed in chip substrates of the sensing unit, and the magnetoresistive elements may constitute bridge circuits.

In addition, the first function calculating means and the second function calculating means may be constructed with a single function calculator having numerical calculation software using a CORDIC algorithm.

In addition, a plurality of GMR elements may be disposed in chip substrates of the sensing unit, and the GMR elements may constitute bridge circuits.

In addition, the sensing unit may include a wheel for scanning the plurality of GMR elements by rotating together with the measured object, and magnets may be attached on the wheel.

According to an angle detecting sensor of the present invention, even in a case where waveform distortion occurs in a signal output from a bridge circuit due to structural characteristics of magnetoresistive elements, since the waveform distortion can be removed by using predetermined calculation, it is possible to detect a rotation angle with a high accuracy.

BRIEF DESCRIPTION OF THE DRAWINGS

Fig. 1 is a constructional block diagram showing a construction of an angle detecting sensor according to the present invention.

Fig. 2 is a plan view showing a sensing unit of an angle detecting sensor.

Fig. 3 is a waveform view showing a relation between signals output from two bridge circuits.

Fig. 4 is a graph showing a relation between an input angle $\theta$ and a non-compensated rotation angle $\theta_1$.

Fig. 5 is a graph showing an error signal (waveform-distortion) superposed at a non-compensated rotation angle $\theta_1$.

Fig. 6 is a graph showing an error signal (waveform-distortion for compensation) artificially simulated by using an actual error signal (waveform-distortion) and an approximate trigonometric function.

Fig. 7 is a graph showing a deviation between a theoretical value and a measured value of an output (-COS signal) of a bridge circuit.

Fig. 8 is a graph showing a deviation of change of resistance value of a magnetoresistive element.

DESCRIPTION OF THE PREFERRED EMBODIMENT

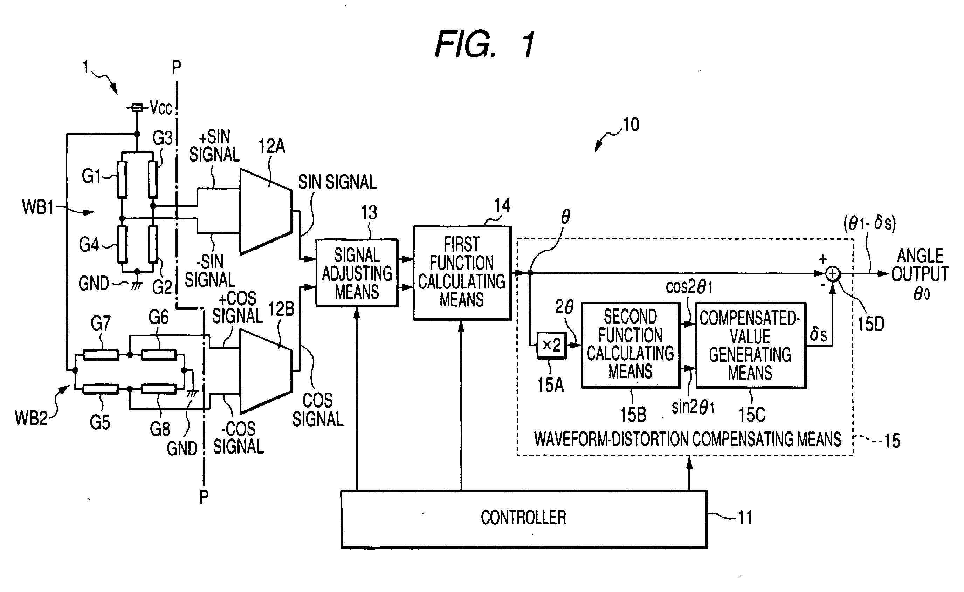

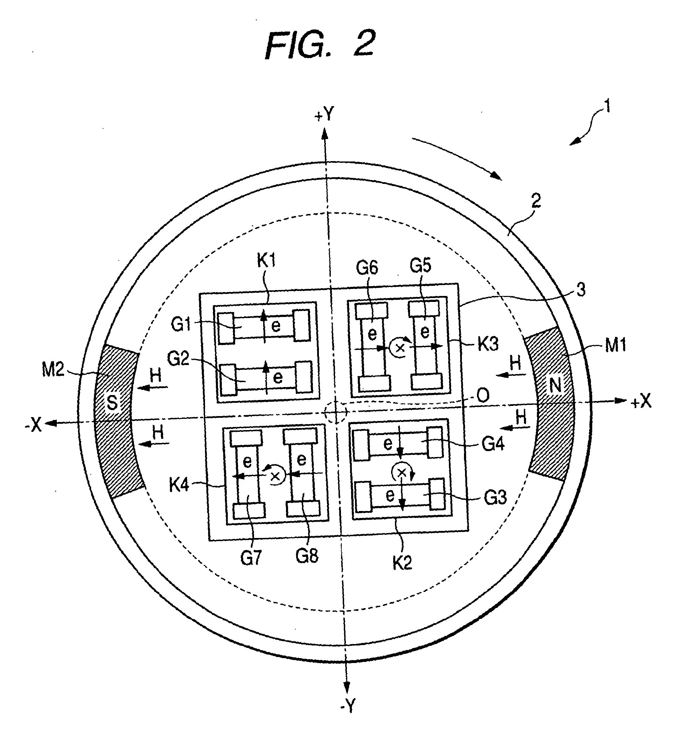

Fig. 1 is a constructional block diagram showing a construction of an angle detecting sensor according to the present invention; and Fig. 2 is a plan view showing a sensing unit of an angle detecting sensor.

The later-described angle detecting sensor detects a rotation angle of a measured object such as a steering shaft of a vehicle.

Referring to Fig. 1, the angle detecting sensor comprises a sensing unit 1 and a signal processing unit 10 for processing an output signal of the sensing unit 1. In the figure, the sensing unit 1 and signal processing unit 10 are shown in the left and right portions of line P-P, respectively.

As shown in Fig. 2, the sensing unit 1 comprises a wheel 2 which freely rotates about a rotation center O and a package 3 in an inner portion of the wheel 2, on which four chip substrates (wafers) K1, K2, K3, and K4 are mounted. The four chip substrates K1 ~ K4 are disposed at positions which are symmetric with respect to the rotation center O (positions having a difference of 90° from each other about the rotation center O) in the package 3. Each of the four chip substrates includes two magnetoresistive elements such as GMR elements (a total of eight GMR elements are represented by G1 to G8). Each of the GMR elements basically has a laminated structure of an exchange bias layer (antiferromagnetic layer), a fixed magnetic layer (a pinned magnetic layer), a non-magnetic layer, and a free magnetic layer.

The chip substrates are obtained by forming the plurality of GMR elements as a film on a single large substrate, aligning a direction of magnetization (magnetization direction) of the fixed magnetic layer with a specific direction under an external magnetic field, and cutting the large substrate into individual chip substrates K1 ~ K4. Therefore, the magnetization directions of the fixed magnetic layers of the two GMR elements disposed on the same chip substrate are equal to each other. Next, the chip substrates K1 ~ K4 are mounted on the package 3 to have a difference of about 90° between the magnetization directions in the adjacent chip substrates.

As shown in Fig. 1, the GMR elements G1 ~ G8 mounted on the chip substrates K1 ~ K4 constitute first and second bridge circuits WB1 and WB2. The first bridge circuit WB1 is constructed with the GMR elements G1, G2, G3, and G4 disposed on the chip substrates K1 and K2 which are symmetric with respect to the rotation center O. Namely, the first bridge circuit WB1 is constructed by connecting in parallel a serially-connected circuit of the GMR element G1 and the GMR element G4 and another serially-connected circuit of the GMR element G3 and the GMR element G2. Similarly, the second bridge circuit WB2 is constructed with the GMR elements G5, G6, G7, and G8 disposed on the chip substrates K3 and K4 which are symmetric with respect to the rotation center O. Namely, the second bridge circuit WB2 is constructed by connecting in parallel a serially-connected circuit of the GMR element G5 and the GMR element G8 and another serially-connected circuit of the GMR element G7 and the GMR element G6.

In addition, one end of each of the connected-in-parallel first and second bridge circuits WB1 and WB2 is connected to a power source Vcc, and the other end thereof is connected to a ground GND.

The wheel 2 and the rotating member, that is, the measured object such as the steering shaft, are coupled with, for example, a gear. Therefore, in accordance with rotation of the rotating member, the wheel 2 rotates. Since the wheel 2 rotates in accordance with rotation of the rotating member, the magnets M1 and M2 can scan the package 3.

Since an external magnetic field H generated between the magnets M1 and M2 is applied to each of the GMR elements G1 ~ G8 in the package 3, the magnetization direction of the free magnetic layer constituting each of the GMR elements G1 ~ G8 is varied. Therefore, the resistance value of each of the GMR elements G1 ~ G8 is varied corresponding to an angle between the magnetization direction of the fixed magnetic layer and the magnetization direction of the free magnetic layer. As a result, two sine wave signals having a phase difference of 180° from each other are output from the connection portion of the GMR elements G3 and G2 and the connection portion of the GMR elements G1 and G4 in the first bridge circuit WB1, respectively. In addition, two sine wave signals having a phase difference of 180° from each other are output from the connection portion of the GMR elements G7 and G6 and the connection portion of the GMR elements G5 and G8 in the second bridge circuit WB2, respectively.

For example, in a case where the wheel 2 rotates clockwise, if the signal output from the connection portion of the GMR elements G3 and G2 in the first bridge circuit WB1 is a +sin signal, a -sin signal is output from the connection portion of the GMR elements G1 and G4, a +cos signal is output from the GMR elements G7 and G6 in the second bridge circuit WB2, and a -cos signal is output from the connection portion of the GMR elements G5 and G8.

The signal processing unit 10 mainly comprises controlling means 11, first signal converting means 12A, second signal converting means 12B, signal adjusting means 13, first function calculating means 14, and waveform-distortion compensating means 15.

The controlling means 11 constructed with a CPU, memory means, etc., has a function of generally controlling a series of signal processing in the signal adjusting means 13, the first function calculating means 14, and the waveform-distortion compensating means 15. The first signal converting means 12A has a function of generating a SIN signal by taking a difference between the two types of +sin and -sin signals output from the first bridge circuit WB1, amplifying the SIN signal, and converting the SIN signal into digital data by using A/D conversion. Similarly, the second signal converting means 12B has a function of generating a COS signal by taking a difference between the two types of +cos and -cos signals output from the second bridge circuit WB2, amplifying the COS signal, and converting the COS signal into digital data by using A/D conversion.

Here, for example, it is assumed that amplitude coefficients are represented by A1, A2, B1 and B2, offset coefficients are represented by a1, a2, b1 and b2, and the +sin, -sin, +cos, and -cos signals are presented by $+A1 \cdot \sin\theta + a1$, $-A2 \cdot \sin\theta - a2$, $+B1 \cdot \cos\theta + b1$, and $-B2 \cdot \cos\theta - b2$, respectively. In this case, the SIN signal generated by the first signal converting means 12A is $(+A1 \cdot \sin\theta + a1) - (-A2 \cdot \sin\theta - a2) = (A1+A2) \cdot \sin\theta + (a1+a2)$. Similarly, the COS signal generated by the second signal converting means 12B is $(+B1 \cdot \cos\theta + b1) - (-B2 \cdot \cos\theta - b2) = (B1+B2) \cdot \cos\theta + (b1+b2)$.

The signal adjusting means 13 has a function of performing offset or gain adjusting process on the SIN and COS signals and matching amplitude references (0 points) and amounts (amplitudes) of the two signals. Namely, in the aforementioned case, the gain adjusting process means matching the amplitudes of the SIN and COS signals to the same value by A1+A2 = B1+B2; and the offset adjusting process means removing a difference between the amplitude references from the origins (0 points) by a1+a2 = b1+b2 = 0.

The first function calculating means 14 has numerical calculation software for calculating functions sin, cos, tan, tan$^{-1}$=arctan, sinh, cosh, exp, log, etc., such as software using, for example, a well-known CORDIC (Coordinate Rotation Digital Computer) algorithm. In addition, the first function calculating means comprises a TAN process for calculating a tangent value (tan = SIN signal/COS signal) from the digital SIN-signal data and the digital COS-signal data and an ATAN process for calculating an inverse tangent value (arctan(SIN signal/COS signal)) from the tangent value obtained by the TAN process to calculate the non-compensated rotation angle $\theta_1$ of the measured object.

The waveform-distortion compensating means 15 comprises angle doubling means 15A, second function calculating means 15B using the aforementioned CORDIC algorithm, compensated value generating means 15C, and subtracting means 15D. The angle doubling means 15A has a function of doubling the non-compensated rotation angle $\theta_1$ obtained by the ATAN process of the first function calculating means 14 to output a double angle $2\theta$. In addition, the angle doubling means 15A which is constructed with, for example, shift registers can easily obtain the double angle $2\theta$ (angle doubling) by shifting the binary data corresponding to the non-compensated rotation angle $\theta_1$ leftwards by 1 bit.

The second function calculating means 15B has a function of generating and outputting $\cos 2\theta_1$ and $\sin 2\theta_1$ from the double angle $2\theta$ output from the angle doubling means 15A by using the CORDIC algorithm. In addition, the first function calculating means 14 and the second function calculating means 15B are constructed to share a single function calculator; and each calculation may be performed by using the function calculator under the control of the controlling means 11.

The compensated value generating means 15C has a function of generating a waveform-distortion compensated value $\delta s$ by using the $\cos 2\theta_1$ and the $\sin 2\theta_1$ output from the second function calculating means 15B. The detailed method of generating the waveform-distortion compensated value $\delta s$ will be described later.

The subtracting means 15D has a function of subtracting the waveform-distortion compensated value $\delta s$ from the non-compensated rotation angle $\theta_1$ obtained by the ATAN process of the first function calculating means 14. As a result, it is possible to remove waveform distortion (error signal) factor included in the non-compensated rotation angle $\theta_1$.

Now, operations of the angle detecting sensor will be described.

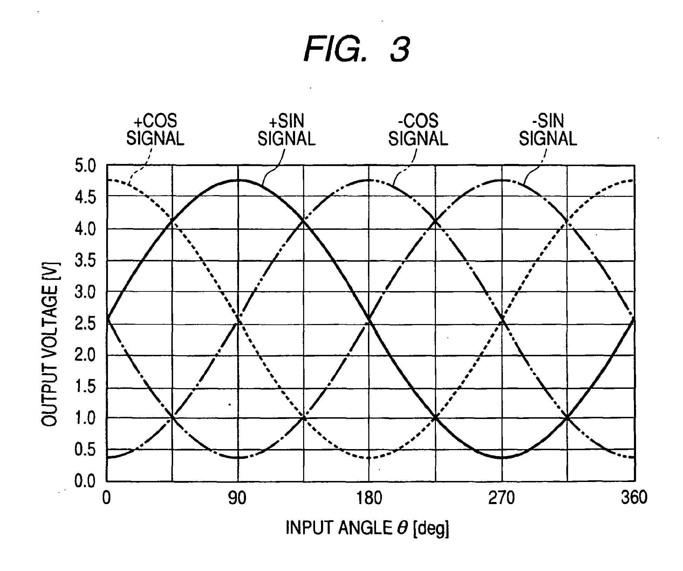

Fig. 3 is a waveform view showing a relation between signals output from two bridge circuits. As shown in Fig. 3, when the wheel 2 is driven to rotate with the input angle $\theta$, $+\sin\theta$ and $-\sin\theta$ are output as +sin and -sin signals from the first bridge circuit WB1; and $+\cos\theta$ and $-\cos\theta_1$ are output as +cos and -cos signals from the second bridge circuit WB2. Here, for a convenience of description, it is assumed that the amplitude coefficients A1, A2, B1 and B2 have a relation of A1 = A2 = B1 = B2 = 1, and the offset coefficients a1, a2, b1 and b2 have a relation of a1 = a2 = b1 = b2 = 0. Even in the assumption, since the signal adjusting means 13 or the TAN process shows the same effect that each of the coefficients is eliminated, there is no problem.

In addition, although not shown in Fig. 3, the four signals (+ sin, -sin, + cos, and -cos signals) includes waveform distortion generated due to resistance distortion of each magnetoresistive element as shown in Fig. 7.

The first signal converting means 12A generates the SIN signal ($2\sin\theta = +\sin\theta-(-\sin\theta)$) from the +sin signal ($+\sin\theta$) and the -sin signal ($-\text{sign}\theta$); and the second signal converting means 12B generates the COS signal ($2\cos\theta = +\cos\theta-(-\cos\theta)$) from the +cos signal ($+\cos\theta$) and the -cos signal ($-\cos\theta$).

The SIN and COS signals output from the respective first and second signal converting means 12A and 12B are subject to the offset and gain adjusting processes in the signal adjusting means 13, so that the 0 points or amplitudes thereof can be matched. Next, the tangent value (tan) is calculated as SIN signal/COS signal = $2\sin\theta/2\cos\theta = \sin\theta/\cos\theta = \tan\theta$ by the TAN process in the first function calculating means 14. Next, the inverse tangent value is calculated by the ATAN process. Here, if the rotation angle (non-compensated rotation angle) output from the first function calculating means 14 is represented by $\theta_1$, $\theta_1$ = arctan(SIN signal/COS signal) = arctan($\tan\theta$).

Fig. 4 is a graph showing a relation between the input angle $\theta$ and the non-compensated rotation angle $\theta_1$; and Fig. 5 is a graph showing an error signal (waveform-distortion) superposed on a non-compensated rotation angle $\theta_1$. Although the rotation angle $\theta_1$, that is, arctan($\sin\theta/\cos\theta$) is typically depicted with a discontinuous curve, the rotation angle $\theta_1$ can be transformed into a continuous curve with respect to the input angle $\theta$ (= 0 ~ 360°).

Since waveform distortion is included as an error signal in each of the four signals, the non-compensated rotation angle $\theta_1$ has a curve where an error signal (waveform distortion) having a sine waveform is superposed on a straight line (a straight line connecting 0° to 360°) indicating an ideal rotation angle as shown in Fig. 4.

Here, the straight line can be represented by a linear function of $\theta_1 = \theta$; and the error signal (waveform distortion) included in the non-compensated rotation angle $\theta_1$ can be represented by an angle difference ($\theta_1-\theta$) obtained by subtracting the linear function $\theta_1 = \theta$ from the non-compensated rotation angle $\theta_1$. As shown in Fig. 5, if the input angle $\theta$ and the angle difference ($\theta_1-\theta$) are represented by the horizontal and vertical axes, respectively, only the error signal (waveform distortion) can be depicted in the graph.

By analyzing the error signal (waveform distortion) with reference to Fig. 5, it can be understood that the maximum amplitude of the error signal is $\beta$; $\beta = 0.4$ in Fig. 5), and it is a periodic function having an angular frequency of four times angular frequency of each of the four signals. Therefore, the error signal (waveform distortion) can be approximate to a trigonometric function represented by the following Equation 2. In addition, a value of each non-compensated rotation angle $\theta_1$ obtained from the approximate trigonometric function representing the error signal is referred to as a waveform-distortion compensated value $\delta s$; and the maximum amplitude $\beta$ of the error signal (waveform distortion) is referred to as a compensation coefficient.

$$[\text{Equation 2}]$$

$$\delta s = -\beta \cdot \sin 4\theta_1$$

$$= -2 \cdot \beta \cdot \sin 2\theta_1 \cdot \cos 2\theta_1$$

Fig. 6 is a graph showing the error signal (waveform-distortion for compensation) artificially simulated by using an actual error signal (waveform-distortion) and an approximate trigonometric function. As shown in Fig. 6, it can be understood that the actual error signal is substantially equal to the error signal artificially simulated by the approximate trigonometric function; and the error signal (waveform distortion) can be completely reproduced by using the approximate trigonometric function represented by Equation 2.

In Equation 2, $2\theta_1$ can be obtained from the angle doubling means 15A of the waveform-distortion compensating means 15; and $\sin 2\theta_1$ and $\cos 2\theta_1$ can be obtained from the second function calculating means 15B. The waveform-distortion compensated value $\delta s$ can be generated by applying the compensation coefficient $\beta$ and the $\sin 2\theta_1$ and the $\cos 2\theta_1$ to Equation 2 in the compensated value generating means 15C.

In addition, although the value of the compensation coefficient (maximum amplitude of error signal) $\beta$ can be defined as a peak value of the angle difference ($\theta_1 - \theta$) between the non-compensated rotation angle $\theta_1$ and the input angle $\theta$, it is an unknown variable until the wheel 2 rotates. Therefore, preferably, the compensation coefficient $\beta$ may be selected as a maximum amplitude of the error signal (waveform distortion) obtained from the angle difference ($\theta_1 - \theta$) calculated by the controlling means 11 at the time when the wheel 2 starts rotating.

In the subtracting means 15D, the angle output $\theta_0$ is generated by subtracting the waveform-distortion compensated value $\delta s$ generated by the compensated value generating means 15C from the rotation angle (non-compensated rotation angle $\theta_1$) output from the first function calculating means 14. The generated angle output $\theta_0$ is the final output of the angle detecting sensor.

Accordingly, in the angle detecting sensor, by subtracting the waveform-distortion compensated value $\delta s$ artificially simulated using Equation 2 in the waveform-distortion compensating means 15 from the non-compensated rotation angle $\theta_1$ generated in the first function calculating means 14, the angle output (rotation angle) $\theta_0$ of which error signal (waveform distortion) is removed can be detected. As a result, the angle output $\theta_0$ of the angle detecting sensor is proportional to the input angle $\theta$, so that it is possible to obtain a highly accurate angle output $\theta_0$ with respect to the input angle $\theta$.

**Claims**

1. An angle detecting sensor having a sensing unit (1) for generating a rotational magnetic field corresponding to rotation of a measured object, sensing the rotational magnetic field, and outputting an output signal corresponding to an input angle of rotation, and a signal processing unit (10) for calculating an rotation angle of the measured object from the output signal,
   wherein the signal processing unit comprises: at least signal converting means (12A, 12B) for generating SIN and COS signals from the output signal; first function calculating means (14) for calculating a non-compensated rotation angle of the measured object from the SIN and COS signals; and compensating means (15) for detecting an error signal between the non-compensated rotation angle and the input angle and calculating a compensated value approximate to the error signal, and calculating the rotation angle of the measured object by removing the compensated value from the non-compensated rotation angle;
   wherein a plurality of magnetoresistive elements (G1-G8) are disposed in chip substrates (K1-K4) of the sensing unit (1), the chip substrates (K1-K4) being disposed with a pitch of 90 degrees;
   wherein the plurality of magnetoresistive elements (G1-G8) are disposed in the rotational magnetic field of a magnet (M1, M2), and
wherein the magnetoresistive elements (G1-G8) constitute bridge circuits (WB1, WB2).

2. The angle detecting sensor according to claim 1, wherein the compensating means (15) comprises: at least second function calculating means (15B) for generating a compensated value by approximating the non-compensated error signal with a trigonometric function; and subtracting means (15D) for subtracting the compensated value from the non-compensated rotation angle.

3. The angle detecting sensor according to claim 1 or 2, wherein the first function calculating means (14) comprises: a TAN process for calculating a tangent value from the SIN and COS signals; and an ATAN process for calculating an inverse tangent value from the tangent value to calculate the non-compensated rotation angle.

4. The angle detecting sensor according to any of claims 1-3, wherein the error signal is waveform distortion generated due to a signal output from the sensing unit (1) having resistance distortion.

5. The angle detecting sensor according to claim 2 or 3, wherein if the input angle input as the rotation angle of the measured object and the non-compensated rotation angle are represented by $\theta$ and $\theta_1$, respectively, and if a compensation coefficient defined as a peak value of an angle difference ($\theta_1-\theta$) between the non-compensated rotation angle $\theta_1$ and the input angle $\theta$ and a waveform-distortion compensated value are represented by $\beta$ and $\delta s$, respectively, the waveform-distortion compensated value $\delta s$ is approximated by the following Equation 2:

$$[\text{Equation 2}]$$

$$\delta s = -\beta \cdot \sin 4\theta_1$$

where, $\theta_1 = \arctan(\sin\theta/\cos\theta)$.

6. The angle detecting sensor according to one of claims 1 to 3, wherein the first function calculating means (14) and the second function calculating means (15B) are constructed with a single function calculator having numerical calculation software using a CORDIC algorithm.

7. The angle detecting sensor according to any of claims 1-6,
wherein the sensing unit (1) includes a wheel (2) for scanning the plurality of magnetoresistive elements (G1-G8) by rotating together with the measured object, and
wherein magnets (M1, M2) are attached on the wheel (2).

**Patentansprüche**

1. VVinkelerfassungssensor mit einer Erfassungseinheit (1) zum Erzeugen eines Rotationsmagnetfeldes entsprechend einer Rotationsbewegung eines Messgegenstands, zum Erfassen des Rotationsmagnetfeldes und zum Abgeben eines Ausgangssignals entsprechend einem Eingangs-Rotationswinkel, und mit einer Signalverarbeitungseinheit (10) zum Berechnen eines Rotationswinkels des Messgegenstands aus dem Ausgangssignal,
wobei die Signalverarbeitungseinheit Folgendes aufweist:

mindestens eine Signalumwandlungseinrichtung (12A, 12B) zum Erzeugen eines SIN- und eines COS-Signals aus dem Ausgangssignal;
eine erste Funktionsberechnungseinrichtung (14) zum Berechnen eines unkompensierten Rotationswinkels des Messgegenstands aus dem SIN- und dem COS-Signal; und eine Kompensationseinrichtung (15) zum Erfassen eines Fehlersignals zwischen dem unkompensierten Rotationswinkel und dem Eingangswinkel und zum Berechnen eines an das Fehlersignal angenäherten, kompensierten Werts sowie zum Berechnen des Rotationswinkels des Messgegenstands durch Entfernen des kompensierten Werts von dem unkompensierten Rotationswinkel;
wobei eine Mehrzahl von Magnetowiderstandselementen (G1-G8) in Chip-Substraten (K1-K4) der Erfassungseinheit (1) angeordnet ist, wobei die Chip-Substrate (K1-K4) mit einer Mittenbeabstandung von 90 Grad angeordnet sind;

wobei die Mehrzahl der Magnetowiderstandselemente (G1-G8) in dem Rotationsmagnetfeld eines Magneten (M1, M2) angeordnet ist, und
wobei die Magnetowiderstandselemente (G1-G8) Brückenschaltungen bilden (WB1, WB2).

2. Winkelerfassungssensor nach Anspruch 1,
wobei die Kompensationseinrichtung (15) Folgendes aufweist:

mindestens eine zweite Funktionsberechnungseinrichtung (15B) zum Erzeugen eines kompensierten Werts durch Approximieren des unkompensierten Fehlersignals mit einer trigonometrischen Funktion;
und eine Subtraktionseinrichtung (15D) zum Subtrahieren des kompensierten Werts von dem unkompensierten Rotationswinkel.

3. wnkelerfassungssensor nach Anspruch 1 oder 2,
wobei die erste Funktionsberechnungseinrichtung (14) Folgendes aufweist: einen TAN-Prozess zum Berechnen eines Tangenswerts aus dem SIN- und dem COS-Signal; und einen ATAN-Prozess zum Berechnen eines inversen Tangenswerts aus dem Tangenswert, um den unkompensierten Rotationswinkel zu berechnen.

4. wnkelerfassungssensor nach einem der Ansprüche 1 bis 3, wobei es sich bei dem Fehlersignal um eine Wellenform-Verzerrung handelt, die aufgrund eines von der Erfassungseinheit (1) abgegebenen Signals mit Widerstands-Verzerrung erzeugt wird.

5. Winkelerfassungssensor nach Anspruch 2 oder 3,
wobei bei Darstellung des als Rotationswinkel des Messgegenstands eingegebenen Eingangswinkels und des unkompensierten Rotationswinkels mit $\theta$ bzw. $\theta_1$ und bei Darstellung eines Kompensations-Koeffizienten, der als Spitzenwert einer Winkeldifferenz $(\theta_1 - \theta)$ zwischen dem unkompensierten Rotationswinkel $\theta_1$ und dem Eingangswinkel $\theta$ definiert ist, und eines hinsichtlich Wellenform-Verzerrung kompensierten Werts mit $\beta$ bzw. $\delta s$ der hinsichtlich Wellenform-Verzerrung kompensierte Wert $\delta s$ durch die nachfolgende Gleichung 2 approximiert wird:

$$[\text{Gleichung 2}]$$
$$\delta s = -\beta \cdot \sin 4\theta_1$$

wobei $\theta_1 = \arctan(\sin\theta/\cos\theta)$ gilt.

6. wnkelerfassungssensor nach einem der Ansprüche 1 bis 3, wobei die erste Funktionsberechnungseinrichtung (14) und die zweite Funktionsberechnungseinrichtung (15B) mit einem einzigen Funktionsrechner mit numerischer Berechnungssoftware unter Verwendung eines CORDIC-Algorithmus gebildet sind.

7. Winkelerfassungssensor nach einem der Ansprüche 1 bis 6, wobei die Erfassungseinheit (1) ein Rad (2) zum Abtasten der Mehrzahl der Magnetowiderstandselemente (G1-G8) unter Rotation zusammen mit dem Messgegenstand aufweist, und
wobei an dem Rad (2) Magnete (M1, M2) angebracht sind.

**Revendications**

1. Capteur d'angle comportant une unité de détection (1) pour générer un champ magnétique rotatif correspondant à la rotation d'un objet mesuré, mesurer le champ magnétique rotatif et délivrer en sortie un signal de sortie correspondant à un angle de rotation d'entrée, et une unité de traitement du signal (10) pour calculer un angle de rotation de l'objet mesuré à partir du signal de sortie,
dans lequel l'unité de traitement du signal comprend : au moins un moyen de conversion du signal (12A, 12B) pour générer des signaux SIN et COS à partir du signal de sortie ; un premier moyen de calcul de fonction (14) pour calculer un angle de rotation non compensé de l'objet mesuré à partir des signaux SIN et COS ; et un moyen de compensation (15) pour détecter un signal d'erreur entre l'angle de rotation non compensé et l'angle d'entrée et calculer une valeur compensée proche du signal d'erreur, et calculer l'angle de rotation de l'objet mesuré en soustrayant la valeur compensée de l'angle de rotation non compensé ;
dans lequel une pluralité d'éléments magnétorésistifs (G1-G8) sont disposés dans des substrats de puce (K1-K4) de l'unité de détection (1), les substrats de puce (K1-K4) étant disposés avec un pas de 90 degrés ;

dans lequel les éléments magnétorésistifs (G1-G8) sont placés dans le champ magnétique rotatif d'un aimant (M1, M2), et

dans lequel les éléments magnétorésistifs (G1-G8) constituent des circuits en pont (WB1, WB2).

**2.** Capteur d'angle selon la revendication 1, dans lequel le moyen de compensation (15) comprend : au moins un deuxième moyen de calcul de fonction (15B) pour générer une valeur compensée en calculant une approximation du signal d'erreur non compensé avec une fonction trigonométrique ; et un moyen de soustraction (15D) pour soustraire la valeur compensée de l'angle de rotation non compensé.

**3.** Capteur d'angle selon la revendication 1 ou 2, dans lequel le premier moyen de calcul de fonction (14) comprend : un processus TAN pour calculer une valeur de tangente à partir des signaux SIN et COS ; et un processus ATAN pour calculer une valeur de tangente inverse à partir de la valeur de tangente pour calculer l'angle de rotation non compensé.

**4.** Capteur d'angle selon l'une quelconque des revendications 1 à 3, dans lequel le signal d'erreur est une distorsion de forme d'onde générée par le fait qu'un signal délivré par l'unité de détection (1) a une distorsion de résistance.

**5.** Capteur d'angle selon la revendication 2 ou 3, dans lequel si l'angle d'entrée entré comme angle de rotation de l'objet mesuré et l'angle de rotation non compensé sont représentés respectivement par $\theta$ et $\theta_1$, et si un coefficient de compensation défini comme valeur de crête d'une différence d'angle $(\theta_1-\theta)$ entre l'angle de rotation non compensé $\theta_1$ et l'angle d'entrée $\theta$ et une valeur compensée en distorsion de forme d'onde sont représentés respectivement par $\beta$ et $\delta s$, la valeur compensée en distorsion de forme d'onde $\delta s$ est approchée par l'équation 2 suivante :

$$[\text{Equation 2}]$$
$$\delta s = -\beta \sin 4\theta_1$$

où $\theta_1 = \arctan(\sin\theta/\cos\theta)$.

**6.** Capteur d'angle selon l'une des revendications 1 à 3, dans lequel le premier moyen de calcul de fonction (14) et le deuxième moyen de calcul de fonction (15B) sont construits avec un seul calculateur de fonction comportant un logiciel de calcul numérique utilisant un algorithme CORDIC.

**7.** Capteur d'angle selon l'une quelconque des revendications 1 à 6,

dans lequel l'unité de détection (1) comprend une roue (2) pour balayer la pluralité d'éléments magnétorésistifs (G1-G8) en tournant en même temps que l'objet mesuré, et

dans lequel des aimants (M1, M2) sont fixés sur la roue (2).

*FIG. 1*

# FIG. 2

# FIG. 3

+COS
SIGNAL

+SIN
SIGNAL

-COS
SIGNAL

-SIN
SIGNAL

OUTPUT VOLTAGE [V]

5.0
4.5
4.0
3.5
3.0
2.5
2.0
1.5
1.0
0.5
0.0

0        90        180        270        360

INPUT ANGLE $\theta$ [deg]

## *FIG. 4*

IDEAL ROTATION ANGLE

ROTATION ANGLE $\theta_1$
BEFORE COMPENSATION

Y-axis: ROTATION ANGLE $\theta_1 = \arctan\left(\frac{\sin\theta}{\cos\theta}\right)$ [deg]

X-axis: INPUT ANGLE $\theta$ [deg]

## *FIG. 5*

ERROR SIGNAL
(WAVEFORM DISTORTION)

Y-axis: ANGLE DIFFERENCE $(\theta_1 - \theta)$ [deg]

X-axis: INPUT ANGLE $\theta$ [deg]

FIG. 6

ACTUAL WAVEFORM DISTORTION

COMPENSATING WAVEFORM DISTORTION

FIG. 7

MEASURED VALUE

THEORETICAL VALUE

DEVIATION

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002303536 A
- JP 2000035470 A
- JP 2003106866 A
- JP 2003066127 A
- DE 19818799 A1
- FR 2776064
- WO 0216879 A1